# EUROPEAN PATENT APPLICATION

(11) **EP 4 026 666 A1**
(43) Date of publication of application: **13.07.2022**
(21) Application number: 20882501.8
(22) Date of filing: 19.10.2020
(51) Int. Cl.: B25J 11/00, B25J 5/00, B25J 9/16, G05D 1/02

(54) **AUTONOMOUS MOVING DEVICE AND WAREHOUSE LOGISTICS SYSTEM**

(30) Priority: 31.10.2019 CN 201911052829
(71) Applicant: Lingdong Technology (Beijing) Co. Ltd, Beijing 100096 (CN)
(72) Inventor: ZHANG, Qiang, Beijing 100086 (CN); CHEN, Jionglin, Beijing 100086 (CN)
(74) Representative: Kurig, Thomas
(86) International application number: PCT/CN2020/121858
(87) International publication number: WO 2021/082964

(57) **Abstract**

Disclosed are an autonomous mobile device (10) and a warehousing logistics system (50). The autonomous mobile device (10) comprises a sensing assembly (110), a processor (120) and a driving assembly (130). The sensing assembly (110) is configured to sense information of an object. The processor (120) is configured to determine whether the object is a movable object according to the information, and to generate a control signal according to a determination result, wherein the control signal is used for indicating an obstacle avoidance distance of the autonomous mobile device (10). The driving assembly (130) is configured to driving the autonomous mobile device (10) to move, wherein when the object is located on an advancing path of the autonomous mobile device (10), the driving assembly (130) drives the autonomous mobile device (10) to perform obstacle avoidance by the obstacle avoidance distance at least. The warehousing logistics system (50) comprises a plurality of autonomous mobile devices (10) and a scheduling server (60). The scheduling server (60) is configured to receive obstacle avoidance information from one of the autonomous mobile devices (10) and sending an advancing signal to indicate other autonomous mobile devices (10) to continue to advance or suspend advancing.

## Description

### Technical Field

The invention relates to a device, in particular to an autonomous mobile device and a warehousing logistics system.

### Background

Autonomous mobile devices available in the market now, such as robots, perform obstacle avoidance by sensors when they move autonomously. However, when the obstacle is a movable object, such as a person or another robot, if the obstacle avoidance range is too small, the moving object is likely to collide with the autonomous mobile device which is making a detour, resulting in damage to people or machines. For static objects, if the obstacle avoidance range is too large, an unnecessary detour distance will be caused, which will reduce the working efficiency of autonomous mobile devices.

### Summary

The application discloses an autonomous mobile device and a warehousing logistics system to solve the problems in the background art by the technical means of determining an obstacle avoidance distance by determining whether an obstacle is a movable object, so as to avoid damage to people or machines caused by an excessively small obstacle avoidance distance, and avoid the reduction of the working efficiency of the autonomous mobile device caused by an excessively large obstacle avoidance distance.

According to an embodiment of the invention, an autonomous mobile device is disclosed, which comprises a sensing assembly, a processor and a driving assembly. The sensing assembly is configured to sense information of an object. The processor is configured to determine whether the object is a movable object according to the information and to generate a control signal according to a determination result, wherein the control signal is used for indicating an obstacle avoidance distance of the autonomous mobile device. The driving assembly is configured to drive the autonomous mobile device to move, wherein when the object is located on an advancing path of the autonomous mobile device, the driving assembly drives the autonomous mobile device to perform obstacle avoidance by the obstacle avoidance distance at least.

According to an embodiment of the invention, the obstacle avoidance distance, where the object is a movable object, is larger than that where the object is a static object.

According to an embodiment of the invention, when the object is located on the advancing path of the autonomous mobile device, the driving assembly controls the autonomous mobile device to perform obstacle avoidance" by taking a semi-circular path as an obstacle avoidance path with the object as an obstacle avoidance center and the obstacle avoidance distance as a radius as.

According to an embodiment of the invention, the sensing assembly comprises an image sensor, and the information is an image of the object captured by the image sensor.

According to an embodiment of the invention, the processor determines whether the object is a movable object by means of images captured by the image sensor at two time points.

According to an embodiment of the invention, the autonomous mobile device further comprises a storage device for storing a contrast image.

According to an embodiment of the invention, the autonomous mobile device further comprises a communication device configured to transmit location information of the autonomous mobile device to a remote server, receive possible movable object features corresponding to the location information from the remote server, and store the possible movable object features in the storage device as the contrast image.

According to an embodiment of the invention, the processor compares the images with the contrast image to determine whether the object is a movable object.

According to an embodiment of the invention, the sensing assembly comprises a distance sensor, and the information is a distance between the object and the autonomous mobile device.

According to an embodiment of the invention, the processor determines whether the object is a movable object by means of distances sensed by the distance sensor at two time points.

According to an embodiment of the invention, the processor is further configured to determine a moving speed of the object according to the information sensed by the sensing assembly at two time points, and selecting the obstacle avoidance path of the autonomous mobile device according to the moving speed.

According to an embodiment of the invention, the sensing assembly is further configured to sense a load on the autonomous mobile device, and the processor adjusts the obstacle avoidance distance according to the load.

According to an embodiment of the invention, a warehousing logistics system is disclosed, which comprises a plurality of autonomous mobile devices and a scheduling server. The scheduling server is configured to receive obstacle avoidance information from one of the autonomous mobile devices and sending a advancing signal to indicate other autonomous mobile devices to continue to advance or suspend advancing.

According to the autonomous mobile device and the warehousing logistics system disclosed by the invention, whether an object is a movable object may be determined by the sensing assembly and the processor, based on which the obstacle avoidance distance is determined, so as to avoid damage to people or machines caused by an excessively small obstacle avoidance distance, and avoid the reduction of the working efficiency of the autonomous mobile device caused by an excessively large obstacle avoidance distance.

### Brief Description of the Drawings

Fig. 1 is a diagram of an autonomous mobile device according to an embodiment of the invention.
Fig. 2 is a diagram of a contrast image according to an embodiment of the invention.
Fig. 3 is a diagram of making a judgment on an object according to an embodiment of the invention.
Fig. 4 is a diagram of communication between a communication device and a remote server according to an embodiment of the invention.
Fig. 5 is a diagram of making a judgment on an object according to an embodiment of the invention.
Figs. 6A and 6B are diagrams of making a judgment on an object according to an embodiment of the invention.
Figs. 7A and 7B are diagrams of making a judgment on an object according to an embodiment of the invention.
Figs. 8A and 8B are diagrams of selecting an obstacle avoidance distance according to an embodiment of the invention.
Figs. 9A and 9B are diagrams of obstacle avoidance paths according to an embodiment of the invention.
Fig. 10 is a diagram of selecting an obstacle avoidance distance according to a load according to an embodiment of the invention.
Fig. 11 is a diagram of selecting an obstacle avoidance path according to a moving speed of an object according to an embodiment of the invention.
Fig. 12 is a diagram of an autonomous mobile device according to another embodiment of the invention.
Fig. 13 is a block diagram of an autonomous mobile device according to an embodiment of the invention.
Fig. 14 is a diagram of a warehousing logistics system according to an embodiment of the invention.

### Detailed Description of Embodiments

The following disclosure provides various embodiments or examples that may be used to realize different features of the disclosure. The specific examples of components and configurations described below are used to simplify the present disclosure. It is conceivable that these descriptions are only examples and are not intended to limit the disclosure. For example, in the following description, forming a first feature on or over a second feature may include some embodiments in which the first and second features are in direct contact with each other; and may also include some embodiments in which additional components are formed between the above-mentioned first and second features, so that the first and second features may not be in direct contact. In addition, the disclosure may repeatedly use assembly symbols and/or labels in several embodiments. This repeated use is based on the purpose of conciseness and clarity, and does not itself represent the relationship between different embodiments and/or configurations discussed.

Further, the use of spatially relative words, such as "below", "under", "lower", "above", and "over", may be for the convenience of explaining the relationship between one assembly or feature depicted in the figure with respect to another one or more components or features. These spatially relative words are intended to cover different orientations of a device in use or operation, in addition to the positions shown in the figure. It is possible to place the device in other orientations (such as to rotate the device by 90 degrees or place the device in other orientations), and these spatially relative descriptive words should be explained accordingly.

Although the numerical ranges and parameters used to define the broad scope of the application are approximate numerical values, the relevant numerical values in specific embodiments have been presented here as accurately as possible. However, any numerical value inevitably contains the standard deviation caused by individual test methods. Here, "about" usually means that the actual value is 10%, 5%, 1% or 0.5% higher or lower than a specific value or range. Or, the word "about" means that the actual value falls within the acceptable standard error of the average value, depending on the consideration of those who have ordinary knowledge in the technical field to which the application belongs. It may be understood that all ranges, quantities, values and percentages used here (for example, to describe material consumption, time, temperature, operating conditions, quantity ratio and the like) have been modified by "about" except for the experimental examples, or unless otherwise explicitly stated. Therefore, unless otherwise stated to the contrary, the numerical parameters disclosed in this specification and the scope of the appended patent application are approximate numerical values, which may be changed as required. At least these numerical parameters should be understood as the indicated number of significant digits and the numerical values obtained by applying the general carry method. Here, the numerical range is expressed as from one endpoint to another endpoint or between two endpoints. Unless otherwise stated, the numerical ranges mentioned herein all include endpoints.

Autonomous mobile devices available in the market, such as robots, all perform obstacle avoidance in a fixed mode. However, when an obstacle is a movable object, such as a person, an animal or a robot, if the autonomous mobile device adopts the same obstacle avoidance mode as when the obstacle is a static object, once the movable object and the autonomous mobile devices move at the same time, the autonomous mobile device may not be able to dodge, thus causing damage to people or devices. On the other hand, if the autonomous mobile device is set to perform obstacle avoidance by a large obstacle avoidance distance regardless of whether the obstacles are movable or static objects , the autonomous mobile device will spend a lot of time in performing obstacle avoidance, resulting in lower working efficiency. In view of the above, the invention discloses an autonomous mobile device and a warehousing logistics system, whether an object is a movable object is determined by a sensing assembly and a processor, based on which the obstacle avoidance distance is determined, so as to avoid damage to people or machines caused by an excessively small obstacle avoidance distance, and avoid the reduction of the working efficiency of the autonomous mobile device caused by an excessively large obstacle avoidance distance.

In the invention, the autonomous mobile device may be an unmanned wagon configured to carry goods in the warehousing logistics system, or a suitcase with an autonomous mobile function. Any autonomous mobile device applying the technical scheme disclosed by the invention should belong to the scope of the invention. It should be noted that in the invention, the movable object may be a person, an animal, a mechanical device or an object that is already in motion, or a person, an animal or a mechanical device that can move at any time but is stationary for now.

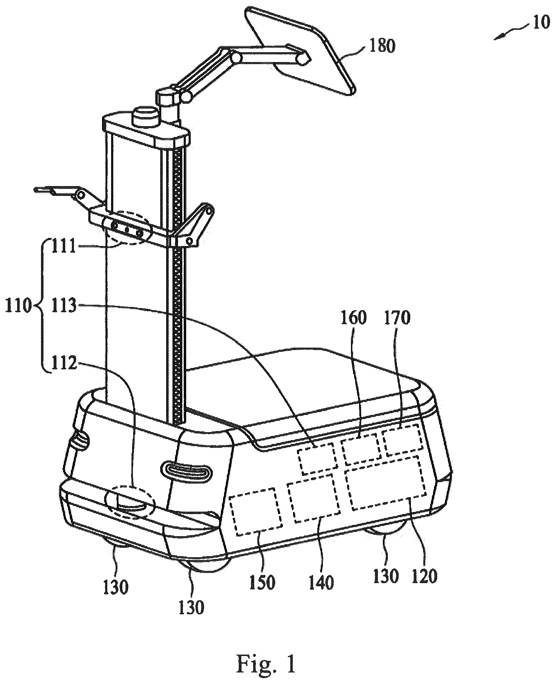

Fig. 1 is a diagram of an autonomous mobile device 10 according to an embodiment of the invention. In this embodiment, the autonomous mobile device 10 is an unmanned wagon for carrying goods. The autonomous mobile device 10 comprises a sensing assembly 110, a processor 120 and a driving assembly 130. The sensing assembly 110 comprises an image sensor 111 and a distance sensor 112 which are arranged on the front of the autonomous mobile device 10. The image sensor 111 is configured to capture an image of an object. The distance sensor 112 is configured to sense a distance between the object and the autonomous mobile device 10. In order to effectively make the autonomous mobile device 10 perform obstacle avoidance, the sensing assembly 110 may be configured to sense information of the object, wherein the information of the object may be the image of the object captured by the image sensor 111, or the distance between the object and the autonomous mobile device 10 sensed by the distance sensor 112, or a combination of the two. It should be noted that in other embodiments, the sensing assembly 110 may further comprise other sensors to realize other functions of the autonomous mobile device 10. Optionally, the sensing assembly 110 may further comprise a weight sensor 113 configured to sense a load on the autonomous mobile device 10. In this embodiment, the image sensor 111 may be a general camera, and the distance sensor 112 may be one or a combination of a depth camera (or RGBD camera), a LiDAR (Light Laser Detection and Ranging), an ultrasonic sensor and an infrared sensor, but the invention is not limited thereto.

The processor 120 is arranged in the autonomous mobile device 10, and is configured to determine whether the object is a movable object according to the information of the object sensed by the sensing assembly 110, such as the image of the object or the distance between the object and the autonomous mobile device, and to generate a control signal according to a determination result. The control signal is used for indicating an obstacle avoidance distance of the autonomous mobile device 10 with respect to the object. The driving assembly 130 is configured to drive the autonomous mobile device 10 to move, wherein when the object is located on an advancing path of the autonomous mobile device 10, the driving assembly 130 performs obstacle avoidance by the obstacle avoidance distance at least. In this embodiment, the driving assembly 130 comprises a motor (not shown) and a power wheel shown in Fig. 1, and the motor provides kinetic energy for the power wheel to drive the autonomous mobile device 10.

It should be noted that the autonomous mobile device 10 may further comprise other assemblies and elements to realize other functions of the autonomous mobile device 10. As shown in Fig. 1, the autonomous mobile device 10 further comprises a storage device 140 configured to store information, a communication device 150 for communicating with a remote server, a battery 160 for providing power, a power distribution module 170 configured to distribute the power to each component, and a display screen 180 configured to display information.

It should be noted that the autonomous mobile device 10 shown in Fig. 1 is only an example, and the invention does not limit the detailed structure of the autonomous mobile device 10. In particular, the invention does not limit the positions of elements such as the image sensor 111 and the distance sensor 112 shown in Fig. 1 on the autonomous mobile device 10. In other embodiments, the autonomous mobile device 10 may comprise a plurality of image sensors 111 and a plurality of distance sensors 112, which are distributed at different positions of the autonomous mobile device 10 to sense the information of the object from multiple directions. The specific positions of the image sensor 111 and the distance sensor 112 depend on actual design requirements.

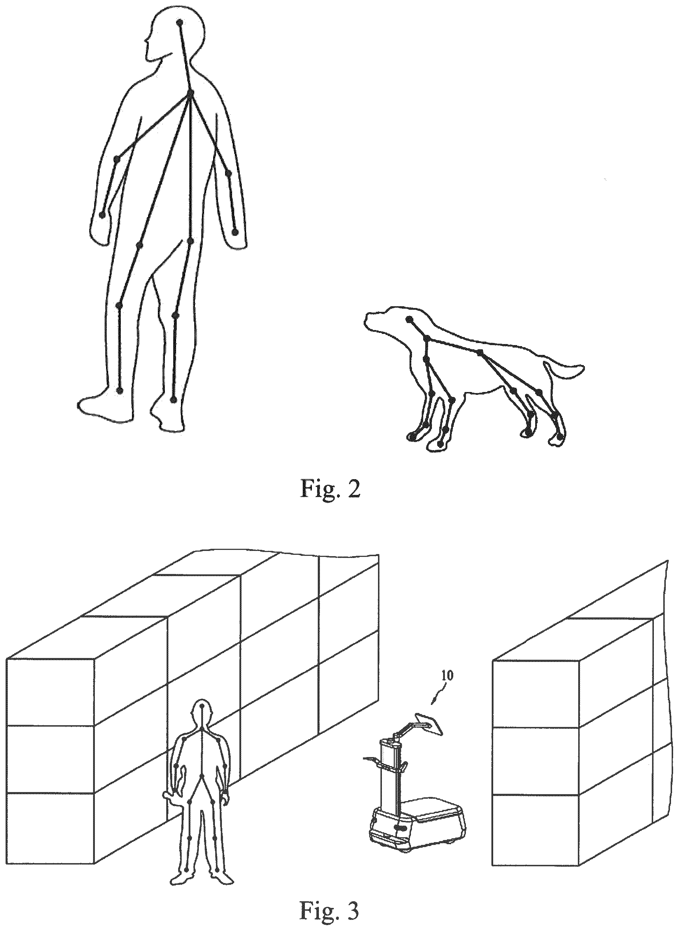

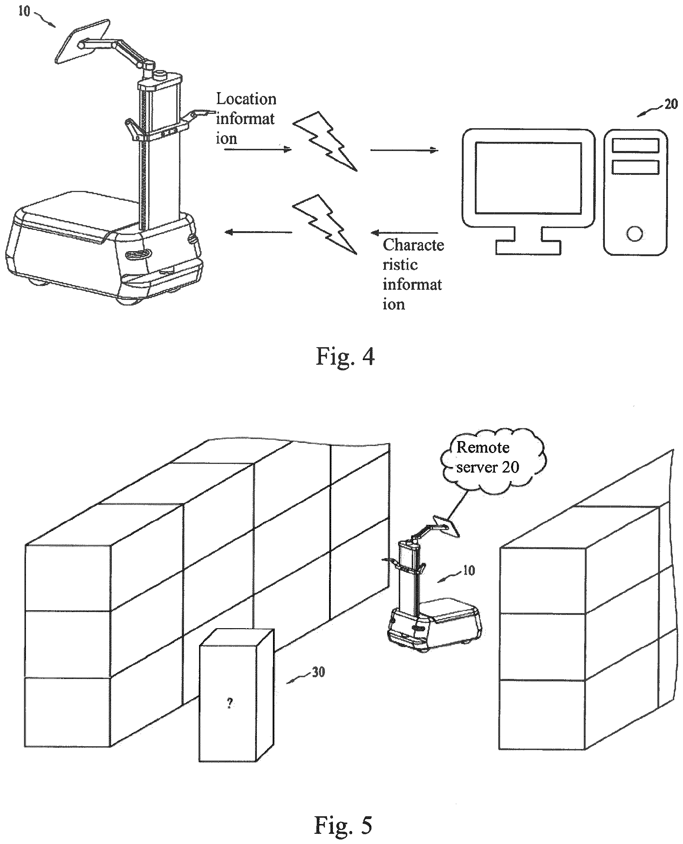

Figs. 2-5 depict embodiments in which the processor 120 obtains appearance characteristics of the object through the image of the object captured by the image sensor 111 when the object appears in a sensing range of the image sensor 111, so as to determine whether the object is a movable object. Specifically, in the embodiment shown in Figs. 2 and 5, the processor 120 works with the image sensor 111 and the storage device 140 to determine whether the object is a movable object.

As mentioned earlier, the storage device 140 may be configured to store information. For example, the storage device 140 may be configured to store the location information of the autonomous mobile device 10, the map information of the location, the task information of the autonomous mobile device 10 and so on. Particularly, the storage device 140 may be configured to store a contrast image. Specifically, the storage device 140 may store the image and appearance characteristic information of a specific object as a contrast image before the autonomous mobile device 10 leaves the factory. For example, the storage device 140 may store the skeleton and appearance characteristic information of a human or an animal as shown in Fig. 2 as a contrast image in advance. With this arrangement, when an object appears in the sensing range of the image sensor 111, the processor 120 may determine whether the object is a movable object such as a human or an animal by comparing the image of the object captured by the image sensor 111 with the contrast image in the storage device 140. Referring to Fig. 3, when the object (human) in Fig. 3 appears in the sensing range of the image sensor 111, the image sensor 111 captures the image of the object (human). Since the storage device 140 stores the image and appearance characteristic information of a specific object as the contrast image in advance, the processor 120 may compare the image of the object (human) captured by the image sensor 111 with the contrast image stored in the storage device 140 in advance, so as to determine that the object is a human.

In other embodiments, the storage device 140 may further store image and appearance characteristics of other movable objects as contrast images. For example, the storage device 140 may further store images of other autonomous mobile devices or known mechanical devices for the processor 120 to refer to. The invention is not limited to what is shown in Fig. 2.

In the embodiments shown in Figs. 2 and 3, the contrast image is stored in the storage device 140 in advance, however, this is not a limitation of the invention. In other embodiments, the autonomous mobile device 10 may communicate with a cloud server or a remote server through the communication device 150 to update the contrast image in the storage device 140 in real time. Referring to Fig. 4, the autonomous mobile device 10 transmits the location information of the autonomous mobile device 10 to the remote server 20 through the communication device 150, and the remote server 20 transmits the characteristic information to the autonomous mobile device 10 in turn according to the location of the autonomous mobile device 10, wherein the characteristic information contains image and appearance characteristic information of movable objects possibly located at the location of the autonomous mobile device 10. The autonomous mobile device 10 stores the characteristic information in the storage device 140 as the contrast image. With this arrangement, when an object appears in the sensing range of the image sensor 111, the processor 120 may determine whether the object is a movable object such as a human or an animal by comparing the image of the object captured by the image sensor 111 with the contrast image in the storage device 140. For example, if the location information of the autonomous mobile device 10 indicates that the autonomous mobile device 10 is located in a warehouse, the remote server 20 may transmit the characteristic information of other autonomous mobile devices or mechanical devices in turn. For another example, if the location information of the autonomous mobile device 10 indicates that the autonomous mobile device 10 is located in an airport, the remote server 20 may transmit the characteristic information of devices such as airport passenger cars and motor sweepers in turn.

In other embodiments, the autonomous mobile device 10 may communicate with the remote server 20 in time to make a judgment when the object cannot be identified by the method in the above embodiments. Referring to Fig. 5, when the object 30 appears in the sensing range of the image sensor 111, the image sensor 111 captures the image of the object 30. However, the processor 120 cannot determine whether the object 30 is a movable object by the contrast image in the current storage device 140. In view of this, the autonomous mobile device 10 communicates with the remote server 20 through the communication device 150. After the communication device 150 transmits the location information of the autonomous mobile device 10 to the remote server 20, the image and appearance characteristic information of movable objects possibly located at the location of the autonomous mobile device is received from the remote server 20, and stored in the storage device 140 as the contrast image. The processor 120 compares the image sensor 111 with the contrast image stored in the storage device 140 to determine whether the object 30 is a movable object by the method in the embodiments shown in Figs. 2 and 3. It should be noted that in other embodiments, the communication device 150 may directly transmit the image of the object 30 to the remote server 20, and then the remote server 20 determines whether the object 30 is a movable object by manual identification or intelligent identification, and transmits a determination result to the processor 120 through the communication device 150.

In the embodiments shown in Figs. 4 and 5, the location information may be one or a combination of an IP address of the autonomous mobile device 10, 4G or 5G location information, or the global positioning system information of the autonomous mobile device 10, but the invention is not limited thereto.

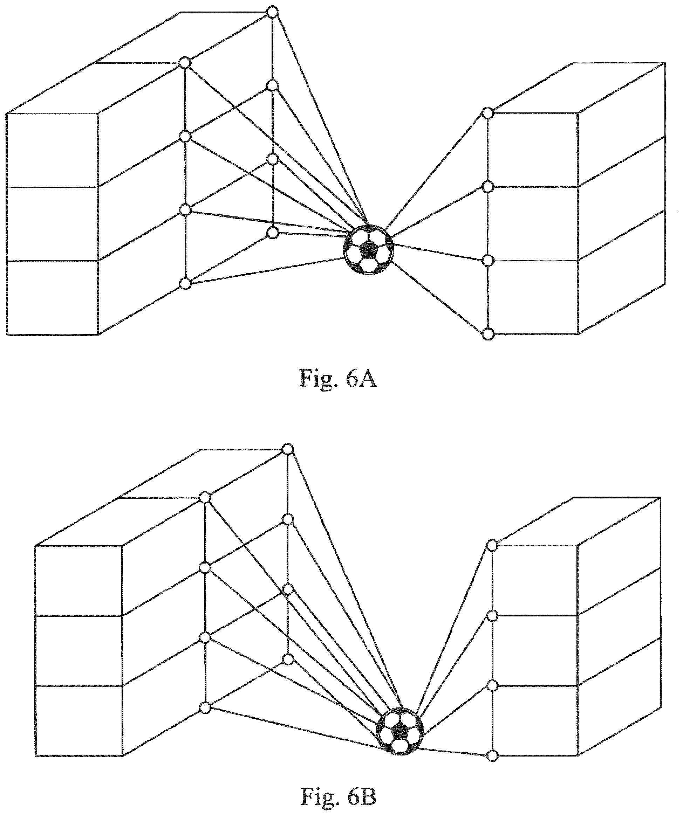

In the invention, the autonomous mobile device 10 may further make a judgment by other image identification methods. Specifically, when an object appears in the sensing range of the image sensor 111, the image sensor 111 may capture the images of the object at two different time points for the processor 120 to determine whether the object is a movable object in motion or not. Refer to Figs. 6A and 6B which illustrate the images of the object captured by the image sensor 111 at two different time points respectively. In Fig. 6A, the image sensor 111 captures a first image of the object at a first time point. In Fig. 6B, the image sensor 111 captures a second image of the object at a second time point. The image sensor 111 transmits the two images to the processor 120, and the processor 120 determines whether the object is a movable object according to the images captured at the two time points. Specifically, the processor 120 obtains distances between the object (ball) and a plurality of feature points in the image from the image shown in Fig. 6A. In this embodiment, the feature points may be endpoints of shelves in the background. Then, the processor 120 obtains distances between the object (ball) and the same feature points from the image shown in Fig. 6B, and determines whether the distances between the object (ball) and the plurality of feature points have changed at the two time points; if so, it is determined that the object (ball) is a movable object in motion; and otherwise, it is determined that the object (ball) is a static object.

It should be noted that if the autonomous mobile device 10 is moving, while obtaining the distances between the object (ball) and the feature points in the image, the processor 120 corrects errors caused by the movement of the autonomous mobile device 10 at the same time, so as to make a more accurate judgment.

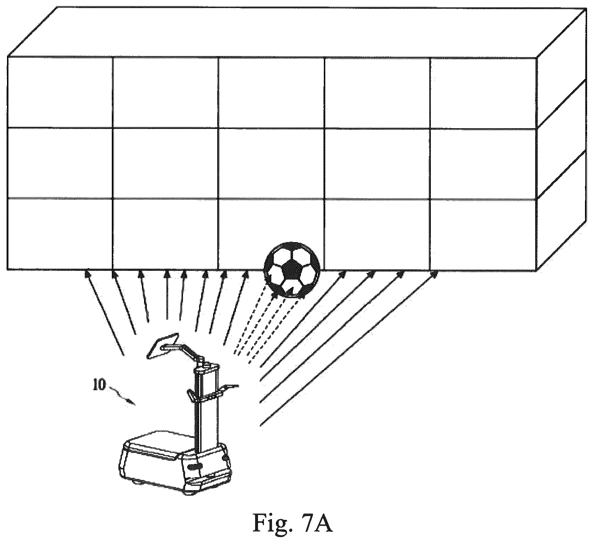

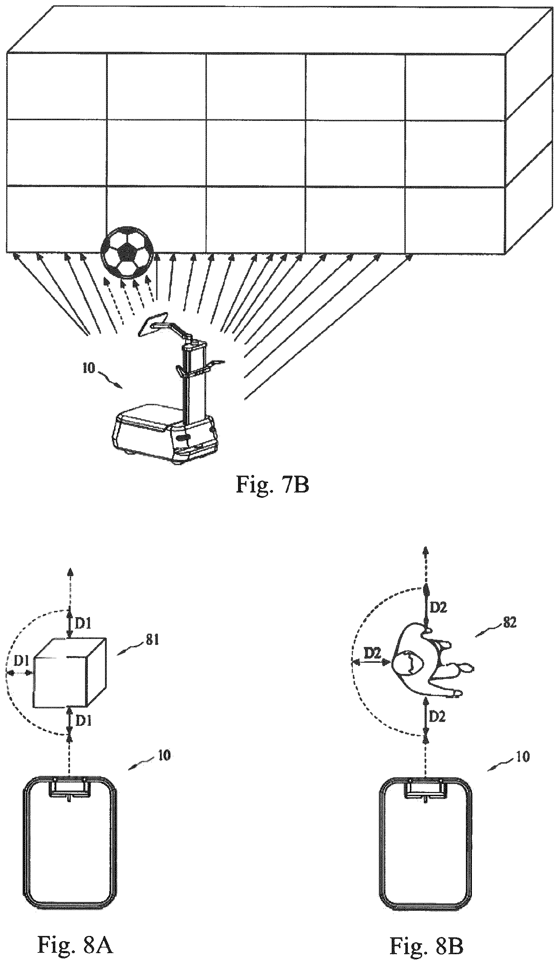

In the invention, the autonomous mobile device 10 may further determine whether the object is a movable object by sensing a relative distance between the object and the autonomous mobile device 10. Specifically, when an object appears in the sensing range of the distance sensor 112, the distance sensor 112 may sense the distance between the object and the autonomous mobile device 10 at two different time points, so that the processor 120 may determine whether the object is a movable object in motion. Refer to Figs. 7A and 7B which respectively depict the distances between the object and the autonomous mobile device 10 sensed by the distance sensor 112 at two different time points. In Fig. 7A, the distance sensor 112 senses the distance between the object (ball) and the autonomous mobile device 10 at a first time point. In Fig. 7B, the distance sensor 112 senses the distance between the object (ball) and the autonomous mobile device 10 at a second time point. The distance sensor 112 transmits the distances sensed at the two time points to the processor 120, and the processor 120 determines whether the object is a movable object according to the distances sensed at the two time points. Specifically, at the time point shown in Fig. 7A, while sensing the distance between the object (ball) and the autonomous mobile device 10, the distance sensor 112 senses a distance between a background object (such as a shelf behind) and the autonomous mobile device 10 at the same time. Then, at the time point shown in Fig. 7B, while sensing the distance between the object (ball) and the autonomous mobile device 10 again, the distance sensor 112 senses the distance between the background object (such as the shelf behind) and the autonomous mobile device 10 at the same time. The processor 120 determines whether the relative distance between the object (ball) and the autonomous mobile device 10 has changed at the two time points based on the distance between the background object (such as the shelf behind) and the autonomous mobile device 10; if so, it is determined that the object (ball) is a movable object in motion; and otherwise, it is determined that the object (ball) is a static object.

It should be noted that if the autonomous mobile device 10 is moving, while sensing the distance between the object (ball) and the autonomous mobile device 10, the processor 120 corrects errors caused by the movement of the autonomous mobile device 10 at the same time, so as to make a more accurate judgment.

In addition, in the above embodiments, the image sensor 111 or the distance sensor 112 performs sensing to obtain the information of the object, so that the processor 120 can determine whether the object is a movable object. Those with ordinary knowledge in the field should easily understand that the autonomous mobile device 10, the image sensor 111 and the distance sensor 112 may jointly perform sensing to obtain more accurate determination results.

After the processor 120 determines whether the object is a movable object according to the above-mentioned embodiments, if the object is on an advancing path of the autonomous mobile device 10, the autonomous mobile device selectively performs obstacle avoidance by different obstacle avoidance distances according to whether the object is a movable object. Specifically, if the processor 120 determines that the object is a movable object, the autonomous mobile device performs obstacle avoidance by a large obstacle avoidance distance, so as to avoid damage to people and devices caused by the movement of the object and the failure of the autonomous mobile device 10 in dodging. On the contrary, if the processor 120 determines that the object is a static object, the autonomous mobile device performs obstacle avoidance by a small obstacle avoidance distance, so as to shorten the obstacle avoidance time of the autonomous mobile device 10 and improve the working efficiency of the autonomous mobile device 10.

Referring to Fig. 8A, in the embodiment shown in Fig. 8A, when the processor 120 determines that the object 81 is a static object according to the above-mentioned embodiments, the autonomous mobile device 10 only needs to perform obstacle avoidance by a small obstacle avoidance distance D1. Therefore, the processor 120 sends out a control signal to make the driving assembly 130 avoid the obstacle by taking a semi-circular obstacle avoidance path with the object 81 as a center and the obstacle avoidance distance D1 as a radius. Referring to Fig. 8B, in the embodiment shown in Fig. 8B, when the processor 120 determines that the object 82 is a movable object according to the above-mentioned embodiments, the autonomous mobile device 10 needs to perform obstacle avoidance by a large obstacle avoidance distance D2 to ensure safety. Therefore, the processor 120 sends out a control signal to make the driving assembly 130 avoid the obstacle by taking a semi-circular obstacle avoidance path with the object 82 as the center and the obstacle avoidance distance D2 as the radius.

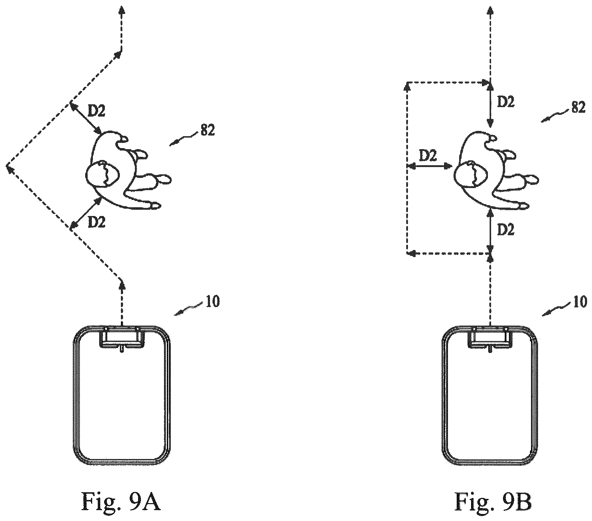

In the embodiments shown in Figs. 8A and 8B, the autonomous mobile device 10 performs obstacle avoidance by taking a semi-circular obstacle avoidance path. However, this obstacle avoidance method adopted by the autonomous mobile device 10 is not a limitation of the invention. In other embodiments, the autonomous mobile device 10 may take other obstacle avoidance paths to perform obstacle avoidance. Referring to Fig. 9A, when the processor 120 determines that the object 82 is a movable object according to the above-mentioned embodiments, the autonomous mobile device 10 needs to perform obstacle avoidance by an obstacle avoidance distance D2 for safety. Then, the processor 120 sends out a control signal to make the driving assembly 130 bypass the object 82 in a straight-line obstacle avoidance manner. Referring to Fig. 9B, when the processor 120 determines that the object 82 is a movable object according to the above-mentioned embodiments, the autonomous mobile device 10 needs to perform obstacle avoidance by an obstacle avoidance distance D2 for safety. Then, the processor 120 sends out a control signal to make the driving assembly 130 bypass the object 82 by taking a quarter turn. In the embodiments shown in Figs. 9A and 9B, the distance between the autonomous mobile device 10 and the object 82 is greater than the obstacle avoidance distance D2 from the beginning, so that a sudden movement of the object 82 will not cause damage to people and devices.

In the invention, the autonomous mobile device 10 may determine which obstacle avoidance manner should be adopted according to a terrain, the width of a passage, the number of obstacles on the advancing path and other factors. In some embodiments, the autonomous mobile device 10 adopts a manner which allows it to perform obstacle avoidance as quickly as possible to improve work efficiency, and in some embodiments, the autonomous mobile device 10 performs obstacle avoidances in a way that can best ensure the safety of people. The invention is not limited thereto.

In the invention, the autonomous mobile device 10 may be configured to carry goods. When a load on the autonomous mobile device 10 is heavy, a collision with people or other devices will cause more serious damage. As shown in the embodiment shown in Fig. 1, the weight sensor 113 is configured to sense a load on the autonomous mobile device 10. With this arrangement, the processor 120 selects the obstacle avoidance distance of the autonomous mobile device 10 according to the information of the object sensed by the sensing assembly 110 in the above embodiments and the load on the autonomous mobile device 10. Specifically, when the load on the autonomous mobile device 10 is greater than a preset weight, the processor 120 may timely adjust the obstacle avoidance distance, so that the autonomous mobile device 10 can perform obstacle avoidance by a larger obstacle avoidance distance for safety.

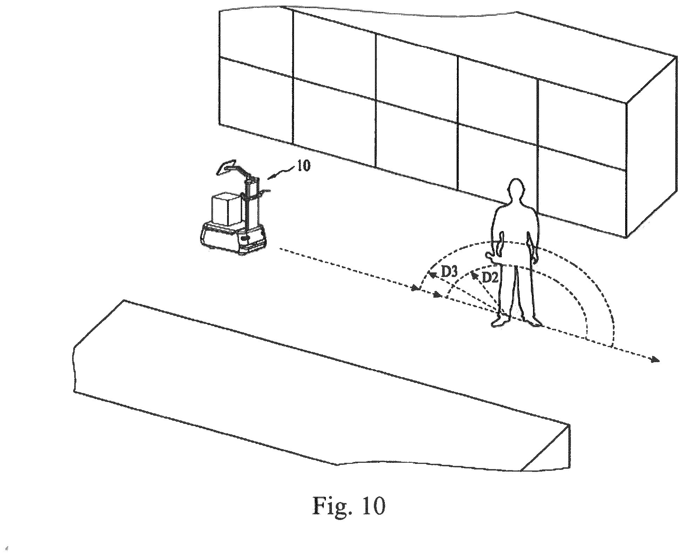

Referring to Fig. 10, in the embodiment shown in Fig. 10, the autonomous mobile device 10 moves in a loaded state and encounters an obstacle on the advancing path. According to the above embodiments, the processor 120 determines that the object is a movable object, so the autonomous mobile device 10 needs to avoid the obstacle by a large obstacle avoidance distance D2 for safety. Meanwhile, the weight sensor 113 in the sensing assembly 110 senses the load on the autonomous mobile device 10, and the processor 120 determines whether the load on the autonomous mobile device 10 is greater than the preset weight at this point. If the load is greater than the preset weight, the processor 120 determines that the autonomous mobile device 10 needs to perform obstacle avoidance by an obstacle avoidance distance D3, wherein the obstacle avoidance distance D3 is greater than the obstacle avoidance distance D2. If the load is less than or equal to the preset weight, the processor 120 determines that the autonomous mobile device 10 performs obstacle avoidance by the obstacle avoidance distance D2.

In some practical situations, when the autonomous mobile device cannot perform obstacle avoidance by a large obstacle avoidance distance due to an excessively narrow passage or too many obstacles, the autonomous mobile device 10 may stop advancing in due time and wait until the obstacles are removed (for example people leave or objects are moved away) to ensure personnel safety. In some embodiments, the autonomous mobile device 10 may further comprise a speaker, a warning light and other assemblies, so that the autonomous mobile device 10 can warn people with warning sounds or warning lights while performing obstacle avoidance or in the case of failing to perform obstacle avoidance.

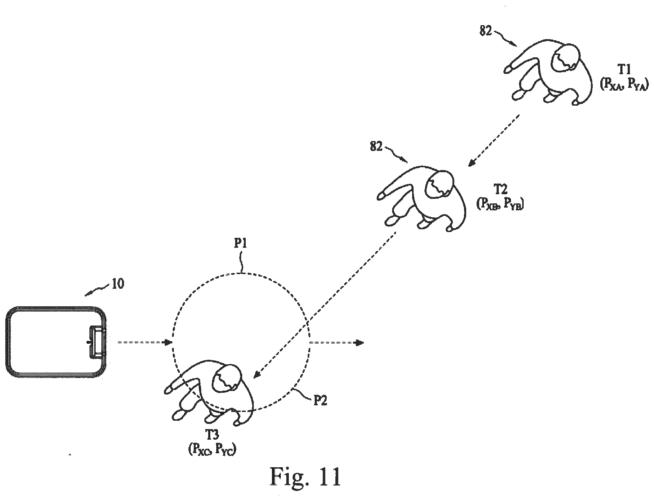

When an object appears in the sensing range of the image sensor 111 or the distance sensor 112, the image sensor 111 or the distance sensor 112 senses the information of the object. Then, according to the embodiments shown in Figs. 6A, 6B, 7A and 7B, the processor 120 determines whether the object is a movable object in motion . In order to accurately select the obstacle avoidance path, a moving speed and direction of the object must be taken into account. Referring to Fig. 11, at a first time point T1, the object 82 is within the sensing range of the image sensor 111 or the distance sensor 112. Meanwhile, according to a position of the object 82, the processor 120 defines the position coordinates of the object 82 at this point as (P_{XA}, P_{YA}). In this embodiment, the coordinate position of the object 82 may be defined with the position of the autonomous mobile device 10 as an origin based on the distance between the object 82 and the autonomous mobile device 10 as sensed by the distance sensor 112. Then, at a second time point T2, the object 82 moves to the position coordinates (P_{XB}, P_{YB}). According to the first time point T1 and the corresponding coordinates (P_{XA}, P_{YA}) and the second time point T2 and the corresponding coordinates (P_{XB}, P_{YB}), the processor 120 may calculate the moving speed and direction of the object 82. Then, according to the moving speed and direction of the object 82 and a moving speed and direction of the autonomous mobile device 10 itself, the processor 120 determines by calculation that the object 82 will enter the advancing path of the autonomous mobile device 10, and begins to prepare for obstacle avoidance. As the autonomous mobile device 10 may select a path P1 or a path P2 shown in the figure as the obstacle avoidance path, the processor 120 selects one of the two obstacle avoidance paths P1 and P2 which can best ensure the safety of personnel according to the moving speed and direction of the object 82 and the moving speed of the autonomous mobile device 10. Taking Fig. 11 as an example, the processor 120 determines by calculation that, based on the moving speed and direction of the object 82 and the moving speed of the autonomous mobile device 10 itself, if the obstacle avoidance path P2 is selected, the autonomous mobile device will collide with the object 82 at (P_{XC}, P_{YC}) at a time point T3. Therefore, the processor 120 selects the obstacle avoidance path P1 to avoid a collision with the object 82.

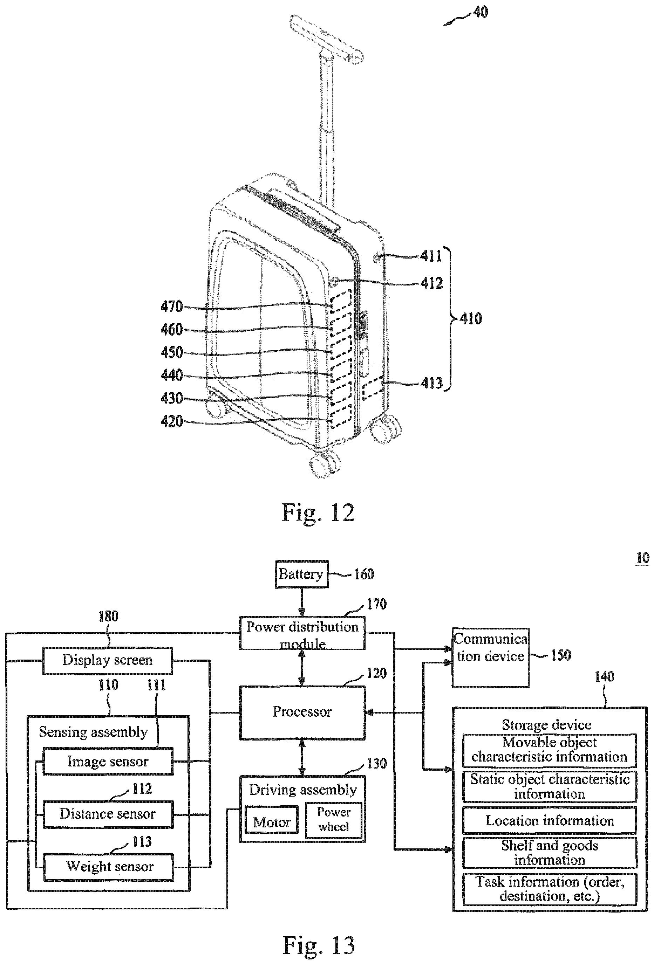

Fig. 12 is a diagram of an autonomous mobile device 40 according to another embodiment of the invention. In this embodiment, the autonomous mobile device 40 is a suitcase with an autonomous mobile function. The autonomous mobile device 40 comprises a sensing assembly 410, a processor 420, a driving assembly 430, a storage device 440, a communication device 450, a battery 460 and a power distribution module 470. The sensing assembly 410 comprises an image sensor 411, a distance sensor 412 and a weight sensor 413. In this embodiment, the functions of the elements included in the autonomous mobile device 40 are the same as those of the corresponding elements of the autonomous mobile device 10 shown in Fig. 1. Those with ordinary knowledge in the field should easily understand after reading the above embodiments that the autonomous mobile device 40 can also apply the technical schemes disclosed in Figs. 2 to 11, so detailed description is omitted here to save space.

It should be noted that in some embodiments, the autonomous mobile device 10 and the autonomous mobile device 40 may not comprise the weight sensors 113 and 413. Accordingly, the autonomous mobile device 10 and the autonomous mobile device 40 may calculate the load according to their own moving acceleration and power provided to the driving assembly 130 and 430.

The autonomous mobile device of this application is summarized in Fig. 13 to facilitate the understanding of the invention. Fig. 13 is a systematic block diagram of an autonomous mobile device according to an embodiment of the application. Taking the autonomous mobile device 10 as an example, the autonomous mobile device 10 comprises a sensing assembly 110, a processor 120, a driving assembly 130, a storage device 140, a communication device 150, a battery 160, a power distribution module 170 and a display screen 180. The sensing assembly 110 comprises an image sensor 111, a distance sensor 112 and a weight sensor 113. In this embodiment, the image sensor 111 may be a general camera, and the distance sensor 112 may be one or a combination of a depth camera, a laser radar, an ultrasonic sensor and an infrared sensor. The sensing assembly 110 is electrically connected with the processor 120 (such as a central processing unit (CPU)). The sensing assembly 110 transmits the sensed information of the object to the processor 120. The processor 120 determines whether the object is a movable object according to the information of the object and sends out a control signal. The driving assembly 130 is electrically connected with the processor 120, and is configured to drive the autonomous mobile device 10 to move. When the object is on an advancing path of the autonomous mobile device 10, the driving assembly 130 performs obstacle avoidance according to an obstacle avoidance distance indicated by the control signal. The driving assembly 130 comprises a motor and a power wheel.

The storage device 140 is configured to store information, such as movable object characteristic information, static object characteristic information, location information of the autonomous mobile device 10, map information of the location, task information of the autonomous mobile device 10, shelf information, etc. The communication device 150 is configured to communicate with a cloud server or a remote server to update the movable object characteristic information in the storage device 140 or to receive a determination result from the remote server on the object. The storage device 140, the communication device 150 and the processor 120 are electrically connected. The display screen 180 is configured to display information. The power distribution module 170 is electrically connected with each assembly of the autonomous mobile device 10, and is configured to distribute power provided by the battery 160 to each assembly.

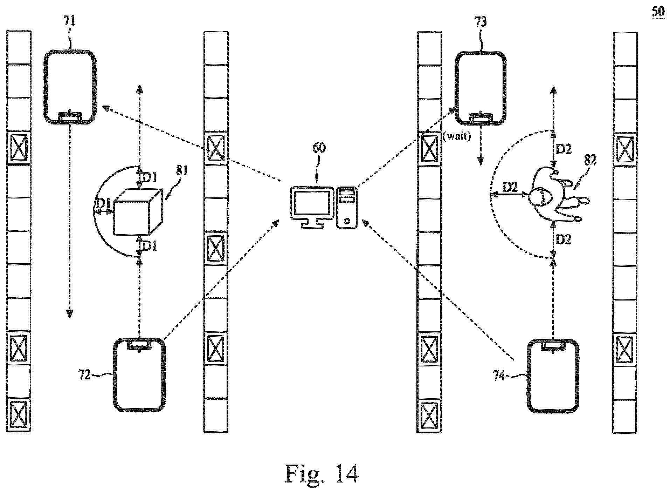

Fig. 14 is a diagram of a warehousing logistics system 50 according to an embodiment of the invention. The warehousing logistics system 50 comprises a scheduling server 60, and autonomous mobile devices 71, 72, 73 and 74. In this embodiment, the autonomous mobile devices 71, 72, 73 and 74 may be realized by the autonomous mobile device 10 shown in Fig. 1. In this embodiment, the warehousing logistics system 50 is configured to control the travel of the autonomous mobile devices 71, 72, 73 and 74 between shelves through the scheduling server 60. Specifically, when the object is determined to be a movable object or a static object according to the embodiments shown in Figs. 2 to 11, the autonomous mobile device will adopt different obstacle avoidance distances. Because distances between shelves in general warehouses are limited, the autonomous mobile devices may enter the advancing paths of other autonomous mobile devices when avoiding obstacles, which may cause collisions between the autonomous mobile devices. In this embodiment, after receiving obstacle avoidance information from one autonomous mobile device, the scheduling server 60 schedules the autonomous mobile devices according to the distances between the shelves, the obstacle avoidance distance adopted by the autonomous mobile device, the speeds and distances between the autonomous mobile devices, etc., and indicates other autonomous mobile devices to advance or suspend advancing, so as to avoid collisions between the autonomous mobile devices.

As shown in Fig. 14, the autonomous mobile device 72 encounters an object 81 on the advancing path. According to the embodiments shown in Figs. 2 to 11, the autonomous mobile device 72 determines that the object 81 is a static object, so it selects the small obstacle avoidance path D1. The autonomous mobile device 72 transmits the obstacle avoidance information indicating that the obstacle avoidance path D1 will be adopted to the scheduling server 60. According to the distances between the shelves, the obstacle avoidance distance D1, the speeds of the autonomous mobile devices 71 and 72, the distance between the two and other factors, the scheduling server 60 determines that the autonomous mobile device 72 will not collide with the autonomous mobile device 71 when performing obstacle avoidance. Therefore, the scheduling server 60 sends a signal to the autonomous mobile device 71 indicating that the autonomous mobile device 72 may continue to advance.

In another case, the autonomous mobile device 74 encounters an object 82 on the advancing path. According to the embodiments shown in Figs. 2 to 11, the autonomous mobile device 74 determines that the object 82 is a movable object, so it selects the large obstacle avoidance path D2 for safety. The autonomous mobile device 74 transmits the obstacle avoidance information indicating that the obstacle avoidance path D2 will be adopted to the scheduling server 60. According to the distances between the shelves, the obstacle avoidance distance D2, the speeds of the autonomous mobile devices 73 and 74, the distance between the two and other factors, the scheduling server 60 determines that the autonomous mobile device 74 will enter the advancing path of the autonomous mobile device 73 when performing obstacle avoidance. Therefore, the scheduling server 60 sends a signal to the autonomous mobile device 73 to indicate the autonomous mobile device 73 to suspend advancing until the autonomous mobile device 74 successfully performs obstacle avoidance.

The features of several embodiments are summarized above so that those skilled in the art can better understand various aspects of this application. Those skilled in the art should know that they can easily use this application as a basis for designing or modifying other processes and structures for carrying out the same purpose and/or achieving the same advantages of the embodiments described herein. Those skilled in the art should also realize that these equivalent structures do not depart from the spirit and scope of the disclosure, and they can make various changes, substitutions and alterations herein without departing from the spirit and scope of the disclosure.

Further, the scope of this application is not intended to be limited to the specific embodiments of processes, machines, manufacturing, material composition, components, methods and steps described in this specification. Those of ordinary skill in the art will easily understand from the disclosure that currently existing or later developed processes, machines, manufacturing, material composition, components, methods or steps that substantially perform the same functions or achieve the same results as the corresponding embodiments described herein can be utilized according to this disclosure. Therefore, the appended claims are intended to include these processes, machines, manufacturing, material composition, components, methods or steps within their scope.

## Claims

1. An autonomous mobile device, comprising:
a sensing assembly configured to sense information of an object;
a processor configured to determine whether the object is a movable object according to the information and to generate a control signal according to a determination result, wherein the control signal is used for indicating an obstacle avoidance distance of the autonomous mobile device; and
a driving assembly configured to drive the autonomous mobile device to move, wherein when the object is located on a advancing path of the autonomous mobile device, the driving assembly drives the autonomous mobile device to perform obstacle avoidance by the obstacle avoidance distance at least.

2. The autonomous mobile device according to claim 1, wherein the obstacle avoidance distance, where the object is a movable object, is larger than that where the object is a static object.

3. The autonomous mobile device according to claim 1, wherein when the object is located on the advancing path of the autonomous mobile device, the driving assembly controls the autonomous mobile device to perform obstacle avoidance by taking a semi-circular path as an obstacle avoidance path with the object as an obstacle avoidance center and the obstacle avoidance distance as a radius.

4. The autonomous mobile device according to claim 1, wherein the sensing assembly comprises an image sensor, and the information is an image of the object captured by the image sensor.

5. The autonomous mobile device according to claim 4, wherein the processor determines whether the object is a movable object by means of images captured by the image sensor at two time points.

6. The autonomous mobile device according to claim 4, further comprising:
a storage device configured to store a contrast image.

7. The autonomous mobile device according to claim 5, further comprising:
a communication device configured to transmit location information of the autonomous mobile device to a remote server, receive possible movable object features corresponding to the location information from the remote server, and store the possible movable object features in the storage device as the contrast image.

8. The autonomous mobile device according to any one of claims 6-7, wherein the processor compares the images with the contrast image to determine whether the object is a movable object.

9. The autonomous mobile device according to claim 1, wherein the sensing assembly comprises a distance sensor, and the information is a distance between the object and the autonomous mobile device.

10. The autonomous mobile device according to claim 9, wherein the processor determines whether the object is a movable object by means of distances sensed by the distance sensor at two time points.

11. The autonomous mobile device according to claim 1, wherein the processor is further configured to determine a moving speed of the object according to the information sensed by the sensing assembly at two time points, and select a obstacle avoidance path for the autonomous mobile device according to the moving speed.

12. The autonomous mobile device according to claim 1, wherein the sensing assembly is further configured to sense a load on the autonomous mobile device, and the processor adjusts the obstacle avoidance distance according to the load.

13. A warehousing logistics system, comprising:
a plurality of autonomous mobile devices according to claim 1; and
a scheduling server configured to receive obstacle avoidance information from one of the autonomous mobile devices and send an advancing signal to indicate other autonomous mobile devices to continue to advance or suspend advancing.
